# EUROPEAN PATENT SPECIFICATION

(11) **EP 1 350 550 B1**
(45) Date of publication and mention of the grant of the patent: **29.11.2006**
(21) Application number: 03100680.2
(22) Date of filing: 18.03.2003
(51) Int. Cl.: B01D 29/01, B01D 29/07, B01D 46/10

(54) **Filter element**
Filterelement
Elément filtrant

(30) Priority: 22.03.2002 GB 2067577
(43) Date of publication of application: 08.10.2003
(73) Proprietor: CNH U.K. LIMITED, Basildon, Essex SS14 3AD (GB)
(72) Inventor: Eyers, William K.A., Burnham on Crouch, Essex CM0 8EQ (GB)
(74) Representative: Vandenbroucke, Alberic

(56) References cited:
- EP-A- 0 759 319
- EP-A- 0 948 985
- WO-A-97/07871
- DE-A- 19 634 720
- DE-C- 19 736 267

## Description

The present invention relates to a filter element for filtering the air entering the cab of an agricultural vehicle but is also applicable to elements for filtering air in other environments and to elements for filtering liquids.

A filter element is normally mounted in a housing and seals against the walls of the housing so that the spaces on opposite sides of the filter only communicate with one another through the filter. Unless a good seal is formed, fluid can bypass the filter instead of passing through it, thereby reducing the effectiveness of the filter.

Conventionally, an efficient seal has been achieved by applying a high compression load to clamp the filter element in the housing. A consequence of this approach is that the filter element must be very rigid and several fixings are needed to maintain the required level of compression.

DE-A-196.34.720 shows in a second embodiment a filter element of which the seal is connected to a support member. As the clamping force for pressing the seal against its seat in the filter housing is transmitted through the side walls of the filter element, these side walls unavoidably need to have a sufficient rigidity to withstand the clamping force. If not, the filter side walls would deform and result in a bad seal.

In EP-A-0.948.985, a filter element is proposed having a side wall of elastic material. A metal insert is provided to reinforce the side wall. A sealing member is inserted into a seat of the filter housing whereafter a wing of the metal insert is pressed into the sealing member for connecting the filter housing to the seat. As such, it is not ensured that the sealing member and the metal insert, since they are not connected to each other, form a perfect seal. Indeed, during mounting, the sealing member may deform due to the shifting action of the wing of the metal insert and as such create an opening through which unfiltered air may pass.

It is therefore an object of the present invention to provide a filter element with a side wall in the form of a fleece with limited rigidity, nevertheless ensuring a reliable seal between the filter element and its housing.

With a view to mitigating the foregoing disadvantages, there is provided in accordance with a first aspect of the invention a filter element comprising a block of filter material having a side wall and a seal secured to the side wall of the block to seal when in use against a housing of the filter; the seal being formed of a support member and a sealing member.

The filter element is characterized in that :
- said side wall is made of a fleece of limited rigidity;
- the support member is secured to the outer side of said side wall and is formed of a more rigid material than said side wall; and
- the sealing member is secured to the support member and is formed of a compliant material; the support member, when in use, being engageable by a cover for compressing the compliant sealing member between the support member and the housing.

The sealing member is preferably formed of a foamed material, in which the cells of the foam are open when the material is not compressed in order to increase the compliance of the foamed material and closed when the material is compressed to enable an effective seal to be achieved against the filter housing.

Advantageously, the sealing member is preformed and subsequently secured to the filter block.

Conveniently, the sealing member may be formed of EPDM (ethylene propylene dieen monomer) polymer or other thermoplastic elastomer that can conform to an irregular surface yet provide an effective seal when compressed.

The support member is preferably formed of a plastics material that is moulded on to the side wall of the filter block. It is further preferred for the support member to be moulded on to the preformed sealing member though it is alternatively possible to secure the sealing member to the support member at a later stage, such as by the use of an adhesive.

To mould the support member, it is convenient to dispense into a mould cavity surrounding the filter block a molten plastics material containing a foaming agent, polyurethane being a suitable plastics material for this purpose.

In accordance with a second aspect of the invention, there is provided a method of forming a filter element which comprises the steps of providing a mould cavity, placing within the mould cavity a preformed sealing member of a relatively compliant material, placing within the mould cavity a block of filter material, and dispensing into the cavity a plastics material to form, when set, a relatively rigid support member that is bonded to a side wall of the filter block and to the sealing member.

The plastics material may contain a foaming agent, whereupon it may be dispensed into the mould cavity prior to closure of the mould defining the cavity.

A gap is preferably provided between the side wall of the filter block and the mould cavity, to allow free expansion of the plastics material parallel to the side wall of the filter.

The invention will now be described further, by way of example, with reference to the accompanying drawings, in which :
Figure 1 is a section through a filter element of the invention;
Figure 2 is a section through the filter element of Figure 1 when installed in the cab of an agricultural vehicle; and
Figure 3 is a section through a mould cavity illustrating one way of manufacturing the filter element of Figure 1.

In the drawings, a filter element comprises a block 10 of filter material, such as a corrugated fibrous sheet, with a surrounding side wall 12 made of a fleece that is adhered to the filter material. The fleece may be made e.g. of cardboard material and thus may present a limited rigidity. The filter element has a surround seal which comprises a relatively rigid support member 14 and a compliant sealing member 16. The support member 14 is made of a foamed polyurethane while the sealing member 16 is made of a foamed EPDM polymer, the cells of which are open but designed to close when the sealing member 16 is compressed.

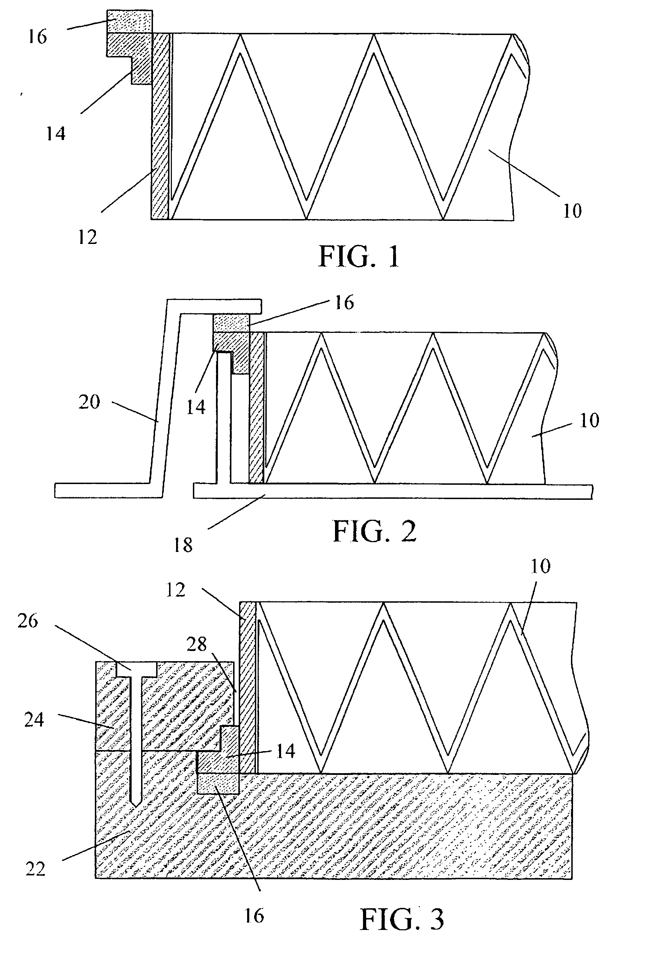

The filter element is shown in Figure 2 installed between a housing 20 and a cover 18, the housing being built into, or defined by, a wall of the cab of an agricultural vehicle. The cover 18 has an upstanding wall that engages the rigid support member 14 and compresses the compliant sealing member 16 between the rigid member 14 and the housing 20. Because of the compliance of the sealing member 16, it can readily conform to the surface of the housing 20 and achieve an effective seal between the rigid support member 14 and the housing 20. As the rigid support member 14 is bonded to the side wall 12, no air can enter the cab without passing through the filter and it is not necessary for there to be a seal between the cover 18 and the support member 14.

Figure 3 shows the preferred method of manufacturing the filter element of Figures 1 and 2. A mould is provided which comprises two mould parts 22 and 24 and means 26 represented schematically for aligning and holding the mould parts together. With the mould parts 22 and 24 separated, a preformed gasket-like sealing member 16 is positioned within a groove in the lower mould part 22. A filter block is next positioned within the mould and molten polyurethane containing a foaming agent is dispensed into the lower part of the mould cavity surrounding the filter block. Thereafter, the mould is closed and the polyurethane expands to fill the mould cavity in order to form the rigid support member 14. The support member is thus moulded on to the fleece side wall 12 of the filter block and the sealing member 16. A small gap 28 between the upper mould part 24 and the side wall 12 allows expansion of the foaming polyurethane material parallel to the plane of the side wall 12.

## Claims

1. A filter element comprising a block (10) of filter material having a side wall (12) and a seal (14, 16) secured to the side wall (12) of the block (10) to seal when in use against a housing (20) of the filter; the seal (14, 16) being formed of a support member (14) and a sealing member (16), and
**characterized in that** :
- said side wall (12) is made of a fleece of limited rigidity;
- the support member (14) is formed of a plastics, rigid material moulded on to the side wall (12) of the filter block (10); and
- the sealing member (16), being formed of a compliant material, is preformed prior to being secured to the filter block (10) and is fixedly secured to the support member (14); the support member, when mounted, being engaged by a cover (18) for compressing the compliant sealing member (16) between the support member (14) and the housing (20).

2. A filter element according to claim 1, **characterized in that** the sealing member (16) is formed of a foamed material, the cells of the foam being open when the material is not compressed in order to increase the compliance of the foamed material and being closed when the material is compressed to enable an effective seal to be achieved against the filter housing (20).

3. A filter element according to any of the preceding claims, **characterized in that** the sealing member (16) is formed of a thermoplastic elastomer.

4. A filter element according to claim 3, **characterized in that** the sealing member (16) is formed of EPDM.

5. A filter element according to any of the preceding claims, **characterized in that** the support member (14) is additionally moulded on to the preformed sealing member (16).

6. A filter element according to any of the preceding claims, **characterized in that** the support member (14) is formed by dispensing into a mould cavity surrounding the filter block (10) a molten plastics material containing a foaming agent.

7. A filter element according to any of the preceding claims, **characterized in that** the support member (14) is formed of polyurethane.

8. A method of forming a filter element according to claim 1,
**characterized in that** the method comprises the steps of :
- providing a mould cavity,
- placing within the mould cavity a preformed sealing member (16) of a relatively compliant material,
- placing within the mould cavity a block (10) of filter material, and
- dispensing into the cavity a plastics material to form, when set, a relatively rigid support member (14) that is bonded to a side wall (12) of the filter block (10) and to the sealing member (16).

9. A method according to claim 8, **characterized in that** the plastics material contains a foaming agent and is dispensed into the mould cavity prior to closure of the mould defining the cavity.

10. A method according to claim 8 or 9, **characterized in that** a gap (28) is provided between the side wall (12) of the filter block (10) and the mould cavity, to allow free expansion of the plastics material parallel to the side wall (12) of the filter block (10).

## Patentansprüche

1. Filterelement mit einem Block (10) aus Filtermaterial, das eine Seitenwand (12) und eine Dichtung (14, 16) aufweist, die an der Seitenwand (12) des Blockes (10) befestigt ist, um im Gebrauch eine Abdichtung gegenüber einem Gehäuse (20) des Filters zu erzielen, wobei die Dichtung (14, 16) aus einem Halterungsteil (14) und einem Dichtungselement (16) gebildet ist, und
**dadurch gekennzeichnet, dass**:
- die Seitenwand (12) aus einem Vlies mit beschränkter Steifigkeit gebildet ist;
- das Halterungsteil (14) aus einem starren Kunststoffmaterial gebildet ist, das auf die Seitenwand (12) des Filterblockes (10) abgeformt ist; und
- das Dichtungselement (16), das aus einem nachgiebigen Material gebildet ist, vor seiner Befestigung an dem Filterblock (10) vorgeformt wird und fest an dem Halterungsteil (14) befestigt ist; wobei das Halterungsteil bei seiner Befestigung mit einer Abdeckung (18) in Eingriff kommt, um das nachgiebige Dichtungselement (16) zwischen dem Halterungsteil (14) und dem Gehäuse (20) zusammenzudrücken.

2. Filterelement nach Anspruch 1, **dadurch gekennzeichnet, dass** das Dichtungselement (16) aus einem aufgeschäumten Material gebildet ist, wobei die Zellen des Schaumes offen sind, wenn das Material nicht zusammendrückt ist, um die Nachgiebigkeit des Schaummaterials zu vergrößern, und geschlossen werden, wenn das Material zusammendrückt wird, um das Erzielen einer effektiven Abdichtung gegen das Filtergehäuse (20) zu ermöglichen.

3. Filterelement nach einem der vorhergehenden Ansprüche, **dadurch gekennzeichnet, dass** das Dichtungselement (16) aus einem thermoplastischen Elastomer gebildet ist.

4. Filterelement nach Anspruch 3, **dadurch gekennzeichnet, dass** das Dichtungselement (16) aus EPDM gebildet ist.

5. Filterelement nach einem der vorhergehenden Ansprüche, **dadurch gekennzeichnet, dass** das Halterungsteil (14) zusätzlich auf dem vorgeformten Dichtungselement (16) abgeformt ist.

6. Filterelement nach einem der vorhergehenden Ansprüche, **dadurch gekennzeichnet, dass** das Halterungsteil (14) durch Abgabe eines geschmolzenen Kunststoffmaterials, das einen Schaumbildner enthält, in einem Formhohlraum gebildet wird, der den Filterblock 10 umgibt.

7. Filterelement nach einem der vorhergehenden Ansprüche, **dadurch gekennzeichnet, dass** das Halterungsteil (14) aus Polyurethan gebildet ist.

8. Verfahren zum Bilden eines Filterelementes nach Anspruch 1,
**dadurch gekennzeichnet, dass** das Verfahren die folgenden Schritte umfasst:
- Bereitstellen eines Formhohlraumes,
- Anordnen eines vorgeformten Dichtungselementes (16) aus einem relativ nachgiebigem Material in dem Formhohlraum,
- Anordnen eines Blockes (10) aus Filtermaterial in dem Formhohlraum; und
- Abgabe eines Kunststoffmaterials in den Hohlraum, das beim Erhärten ein relativ starres Halterungsteil (14) bildet, das mit einer Seitenwand (12) des Filterblockes (10) und dem Dichtungselement (16) verbunden ist.

9. Verfahren nach Anspruch 8, **dadurch gekennzeichnet, dass** das Kunststoffmaterial einen Schaumbildner enthält und in den Formhohlraum vor dem Schließen der den Hohlraum umgrenzenden Form eingebracht wird.

10. Verfahren nach Anspruch 8 oder 9, **dadurch gekennzeichnet, dass** ein Spalt (28) zwischen der Seitenwand 12 des Filterblockes (10) und dem Formhohlraum vorgesehen ist, um eine freie Ausdehnung des Kunststoffmaterials parallel zu der Seitenwand (12) des Filterblockes (10) zu ermöglichen.

## Revendications

1. Élément filtrant comprenant un bloc (10) de matériau filtrant comportant une paroi latérale (12) et un joint d'étanchéité (14, 16) fixé à la paroi latérale (12) du bloc (10) destiné à en assurer l'étanchéité lorsqu'il est utilisé contre un boîtier (20) du filtre, le joint d'étanchéité (14, 16) étant formé d'un membre de support (14) et d'un membre d'étanchéité (16), et **caractérisé en ce que** :
- ladite paroi latérale (12) est formée d'une nappe à rigidité limitée,
- le membre de support (14) est formé d'une matière plastique rigide moulée sur la paroi latérale (12) du bloc de filtre (10), et
- le membre d'étanchéité (16), formé d'un matériau souple, est préformé avant d'être fixé sur le bloc de filtre (10) et monté de manière fixe sur le membre de support (14), le membre de support, une fois fixé, étant engagé par un couvercle (18) destiné à comprimer le membre d'étanchéité souple (16) entre le membre de support (14) et le boîtier (20).

2. Élément filtrant selon la revendication 1, **caractérisé en ce que** le membre d'étanchéité (16) est formé d'un matériau expansé, où les alvéoles de la mousse sont ouvertes lorsque le matériau n'est pas comprimé, afin d'améliorer la malléabilité du matériau expansé, et sont fermées lorsque le matériau est comprimé, afin de permettre la réalisation d'une étanchéité efficace contre le boîtier de filtre (20).

3. Élément filtrant selon l'une quelconque des revendications précédentes, **caractérisé en ce que** le membre d'étanchéité (16) est formé d'un élastomère thermoplastique.

4. Élément filtrant selon la revendication 3, **caractérisé en ce que** le membre d'étanchéité (16) est formé d'EPDM.

5. Élément filtrant selon l'une quelconque des revendications précédentes, **caractérisé en ce que** le membre de support (14) est en outre moulé sur le membre d'étanchéité préformé (16).

6. Élément filtrant selon l'une quelconque des revendications précédentes, **caractérisé en ce que** le membre de support (14) est formé par distribution, dans une cavité de moule entourant le bloc de filtre (10) d'un matériau plastique fondu contenant un agent porogène.

7. Élément filtrant selon l'une quelconque des revendications précédentes, **caractérisé en ce que** le membre de support (14) est formé de polyuréthanne.

8. Procédé de formage d'un élément filtrant selon la revendication 1, **caractérisé en qu'**il comprend les étapes suivantes:
- la mise à disposition d'une cavité de moule,
- le placement dans la cavité de moule d'un membre (16) d'étanchéité préformé fait d'un matériau relativement malléable,
- le placement dans la cavité de moule d'un bloc (10) de matériau filtrant, et
- la distribution dans la cavité d'un matériau plastique pour former, après durcissement, un membre de support (14) relativement rigide lié à une paroi latérale (12) du bloc filtrant (10) et au membre d'étanchéité (16).

9. Procédé selon la revendication 8, **caractérisé en que** le matériau plastique contient un agent porogène et est réparti dans la cavité de moule avant la fermeture du moule définissant la cavité.

10. Procédé selon la revendication 8 ou 9, **caractérisé en ce qu'**il est prévu un intervalle (28) entre la paroi latérale (12) du bloc de filtre (10) et la cavité du moule, afin de permettre une libre expansion du matériau plastique parallèlement à la paroi latérale (12) du bloc de filtre (10).
